# EUROPEAN PATENT APPLICATION

(11) **EP 3 896 013 A1**
(43) Date of publication of application: **20.10.2021**
(21) Application number: 19896018.9
(22) Date of filing: 24.07.2019
(51) Int. Cl.: B65G 43/00, B65G 15/32, B65G 43/02, G01B 7/00

(54) **POSITION INFORMATION PROCESSING DEVICE FOR CONVEYOR BELT, CONVEYOR BELT DEVICE, POSITION INFORMATION PROCESSING METHOD FOR CONVEYOR BELT, CONVEYOR BELT, AND POSITION INFORMATION PROCESSING DEVICE**

(30) Priority: 11.12.2018 JP 2018231636
(71) Applicant: BRIDGESTONE CORPORATION, Chuo-ku Tokyo 104-8340 (JP)
(72) Inventor: ENSHU Hirozumi, Tokyo 104-8340 (JP); TAKEUCHI Hirotaka, Tokyo 104-8340 (JP)
(74) Representative: Oxley, Robin John George
(86) International application number: PCT/JP2019/029064
(87) International publication number: WO 2020/121586

(57) **Abstract**

Provided is a position information processing device 3 for a conveyor belt, including a plurality of magnet rows 14, a magnetic sensor unit 31, and a processing unit 33, each of the plurality of magnet rows forms a pole arrangement providing position information, the plurality of magnet rows are different from one another in the pole arrangement, the magnetic sensor unit is configured to detect respective poles of the plurality of magnets forming the magnet row on the inner circumferential side or the outer circumferential side of the belt body, and the processing unit is configured to specify the pole arrangement of the magnet row based on an output from the magnetic sensor unit.

## Description

### TECHNICAL FIELD

The present disclosure relates to a position information processing device for a conveyor belt, a conveyor belt apparatus, a position information processing method for a conveyor belt, a conveyor belt, and a position information processing device.

This application is based upon and claiming the benefit of priority from Japanese Patent Application No. 2018-231636, filed in Japan on December 11, 2018, the entire content of which is incorporated herein by reference.

### BACKGROUND

Heretofore, various techniques of managing a plurality of positions on an object (e.g., a conveyor belt) have been suggested.

An example of a technique of managing a plurality of positions on the conveyor belt is a technique including burying, in the conveyor belt, a plurality of vertical tear detecting loop coils arranged at even intervals along a circumferential direction, and a start loop coil including two loop coils arranged close to each other, so that a position of each loop coil can be specified based on a position of the start loop coil (e.g., PTL 1).

### CITATION LIST

### Patent Literature

PTL 1: Japanese Patent Laid-Open No. 2005-162430

### SUMMARY

### (Technical Problem)

In a technique of managing a position on an object (e.g., a conveyor belt) by use of a loop coil as described above, however, a position of each loop coil needs to be specified based on a start loop coil, and hence, there is a defect that it is not easy to individually manage positions of respective loop coils.

The present disclosure presents, as a newly found technique of managing the plurality of positions on the object (e.g., the conveyor belt), a technique by which a plurality of positions can be easily individually managed.

An object of the present disclosure is to provide a position information processing device for a conveyor belt, capable of easily individually managing a plurality of positions on the conveyor belt, a conveyor belt apparatus, a position information processing method for a conveyor belt, and a conveyor belt, as well as a position information processing device capable of easily individually managing a plurality of positions on an object.

### (Solution to Problem)

The present disclosure is directed to a position information processing device for a conveyor belt including the belt body made of an endless ring-shaped rubber, the position information processing device including:
a plurality of magnet rows arranged at positions away from one another in a circumferential direction inside or on a surface of a belt body of the conveyor belt, each magnet row including a plurality of magnets,
a magnetic sensor unit, and
a processing unit, wherein each of the plurality of magnet rows forms a pole arrangement providing position information by an arrangement of respective poles of the plurality of magnets forming the magnet row on an inner circumferential side or an outer circumferential side of the belt body,
the plurality of magnet rows are different from one another in the pole arrangement,
the magnetic sensor unit is configured to detect the respective poles of the plurality of magnets forming the magnet row on the inner circumferential side or the outer circumferential side of the belt body, and
the processing unit is configured to specify the pole arrangement of the magnet row based on an output from the magnetic sensor unit.

A conveyor belt apparatus of the present disclosure includes:
the position information processing device for the conveyor belt, and
the belt body of the conveyor belt.

A position information processing method for a conveyor belt of the present disclosure is a position information processing method for a conveyor belt in which the position information processing device for the conveyor belt is used, the method including:
a pole detection step of detecting, by the magnetic sensor unit, respective poles of the plurality of magnets forming the magnet row on the inner circumferential side or the outer circumferential side of the belt body, and
a pole arrangement specifying step of specifying, by the processing unit, the pole arrangement of the magnet row based on an output from the magnetic sensor unit in the pole detection step.

A conveyor belt of the present disclosure includes:
a belt body made of an endless ring-shaped rubber, and
a plurality of magnet rows arranged at positions away from one another in a circumferential direction inside or on a surface of the belt body, each magnet row including a plurality of magnets, wherein each of the plurality of magnet rows forms a pole arrangement by an arrangement of respective poles of the plurality of magnets forming the magnet row on an inner circumferential side or an outer circumferential side of the belt body, and
the plurality of magnet rows are different from one another in the pole arrangement.

A position information processing device of the present disclosure includes:
a plurality of magnet rows arranged at positions away from one another inside or on a surface of an object, each magnet row including a plurality of magnets,
a magnetic sensor unit, and
a processing unit, wherein each of the plurality of magnet rows forms a pole arrangement providing position information by an arrangement of respective poles of the plurality of magnets forming the magnet row on the same side,
the plurality of magnet rows are different from one another in the pole arrangement,
the magnetic sensor unit is configured to detect the respective poles of the plurality of magnets forming the magnet row on the same side, and
the processing unit is configured to specify the pole arrangement of the magnet row based on an output from the magnetic sensor unit.

### (Advantageous Effect)

According to the present disclosure, there can be provided a position information processing device for a conveyor belt, capable of easily individually managing a plurality of positions on the conveyor belt, a conveyor belt apparatus, a position information processing method for a conveyor belt, and a conveyor belt, as well as a position information processing device capable of easily individually managing a plurality of positions on an object.

### BRIEF DESCRIPTION OF THE DRAWINGS

In the accompanying drawings:
FIG. 1 is a schematic view schematically illustrating a position information processing device for a conveyor belt according to a first embodiment of the present disclosure (the position information processing device according to the first embodiment of the present disclosure), a conveyor belt apparatus according to the first embodiment of the present disclosure, and a belt conveyor including the conveyor belt according to the first embodiment of the present disclosure;
FIG. 2 is a perspective view illustrating, from diagonally above, a part of a carrier-side portion of the conveyor belt of FIG. 1, and a magnetic sensor unit;
FIG. 3 is a plan view illustrating, from above, a part of the carrier-side portion of the conveyor belt of FIG. 1, and the magnetic sensor unit;
FIG. 4 is a cross-sectional view in a width direction, illustrating a behavior when a magnet row in the conveyor belt of FIG. 1 is located above the magnetic sensor unit;
FIG. 5 is a table providing an arrangement order of the magnet rows and loop coils in the conveyor belt of FIG. 1;
FIG. 6 is a schematic view schematically illustrating a position information processing device for a conveyor belt according to a second embodiment of the present disclosure (the position information processing device according to the second embodiment of the present disclosure), a conveyor belt apparatus according to the second embodiment of the present disclosure, and a belt conveyor including the conveyor belt according to the second embodiment of the present disclosure;
FIG. 7 is a perspective view illustrating, from diagonally above, a part of a carrier-side portion of the conveyor belt of FIG. 6, and a magnetic sensor unit; and
FIG. 8 is a cross-sectional view in a width direction, illustrating a behavior when a magnet row in the conveyor belt of FIG. 6 is located above the magnetic sensor unit.

### DETAILED DESCRIPTION

A position information processing device for a conveyor belt, a conveyor belt apparatus, a position information processing method for a conveyor belt and a conveyor belt of the present disclosure can be used preferably, for example, in a conveyor belt to convey various articles to be conveyed in a mining site, a construction site and the like.

A position information processing device of the present disclosure can be used preferably in various objects including the conveyor belt.

Hereinafter, embodiments of the position information processing device for the conveyor belt, the conveyor belt apparatus, the position information processing method for the conveyor belt, the conveyor belt and the position information processing device according to the present disclosure will be illustrated and described with reference to the drawings. Constituent elements common in the respective drawings will be denoted with the same reference signs.

### [First Embodiment]

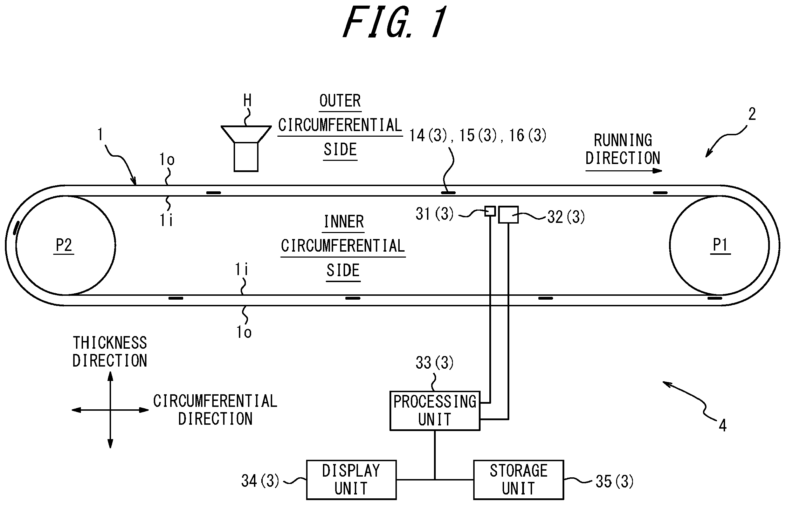

FIG. 1 to FIG. 4 illustrate a position information processing device 3 for a conveyor belt according to a first embodiment of the present disclosure, a conveyor belt apparatus 4 according to the first embodiment of the present disclosure, and a belt conveyor 2 provided with a conveyor belt 1 according to the first embodiment of the present disclosure.

Note that the position information processing device 3 for the conveyor belt according to the first embodiment of the present disclosure also corresponds to a position information processing device according to the first embodiment of the present disclosure. Hereinafter, the position information processing device 3 for the conveyor belt according to the present embodiment will be also referred to simply as "the position information processing device 3".

The belt conveyor 2 of FIG. 1 is provided with a pair of pulleys PI, P2, and a hopper H, in addition to the conveyor belt 1 of the present embodiment. The conveyor belt 1 is formed in an endless belt shape, and wound around the pair of pulleys PI, P2. Each of the pair of pulleys P1, P2 is formed to rotate about a rotation axis extending in a width direction of the conveyor belt 1. In the pair of pulleys PI, P2, one pulley P1 is a drive pulley, and the other pulley P2 is a driven pulley. The pair of pulleys P1, P2 are driven to rotate the conveyor belt 1 in a circumferential direction (clockwise in FIG. 1).

Note that in the present disclosure, "the circumferential direction", "a thickness direction", "the width direction", "an inner circumferential side" and "an outer circumferential side" of the conveyor belt 1 (eventually, a belt body 10) will be referred to simply as "the circumferential direction", "the thickness direction", "the width direction", "the inner circumferential side" and "the outer circumferential side", respectively, unless otherwise mentioned.

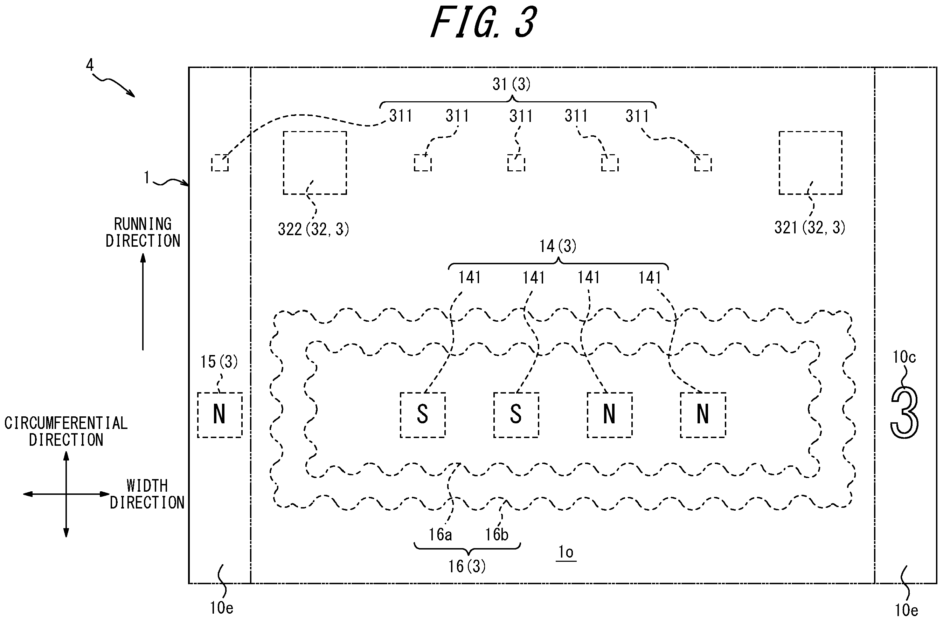

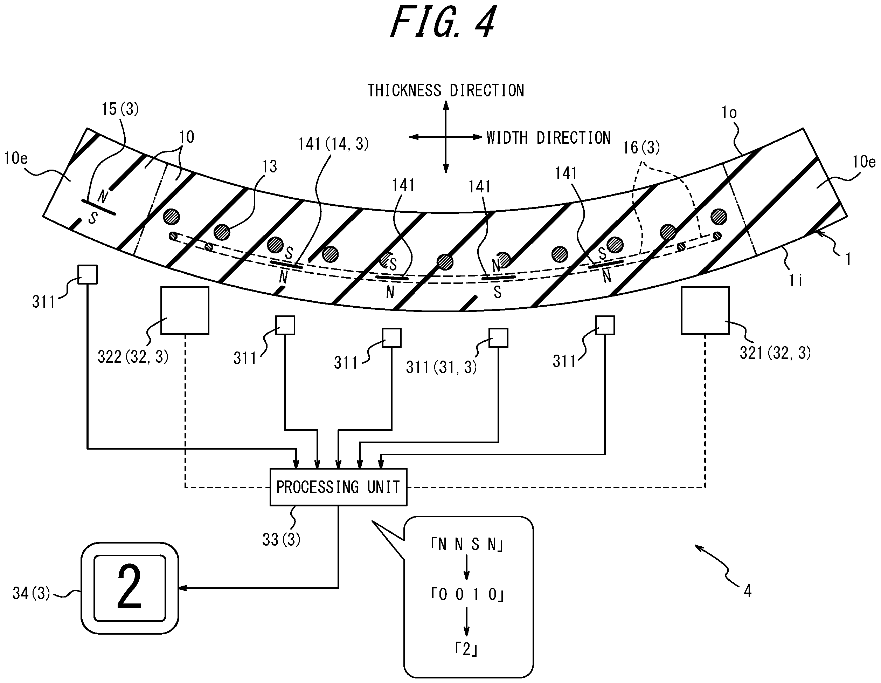

Also, hereinafter, one side in the width direction (a left side in FIG. 3 and FIG. 4) will be referred to as "a first side in the width direction", and the other side in the width direction (a right side in FIG. 3 and FIG. 4) will be referred to as "a second side in the width direction".

In the conveyor belt 1, a portion above the pair of pulleys PI, P2 in a perpendicular direction corresponds to a carrier-side portion, which runs from a driven pulley P2 side toward a drive pulley P1 side with the article to be conveyed (not illustrated in the drawing) thrown down from the hopper H being carried on the portion. In the carrier-side portion of the conveyor belt 1, an outer circumferential surface 1o of the conveyor belt 1 corresponds to an upper surface in the perpendicular direction, and a conveying surface of the article to be conveyed, and an inner circumferential surface 1i of the conveyor belt 1 is a lower surface in the perpendicular direction. For example, the carrier-side portion runs with end portions on opposite sides in the width direction being bent upward, which prevents the article to be conveyed from falling down from the conveying surface. The article to be conveyed that is conveyed by the carrier-side portion is thrown down to an unloading section (not illustrated in the drawing) disposed in a vicinity of the pulley P1.

On the other hand, in the conveyor belt 1, a portion below the pair of pulleys PI, P2 in the perpendicular direction corresponds to a return-side portion, and runs from the drive pulley P1 side toward the driven pulley P2 side with the outer circumferential surface 1o being a lower surface in the perpendicular direction. The return-side portion runs, for example, in a state of being developed flat along the width direction.

The conveyor belt 1 of the present embodiment includes the belt body 10 made of an endless ring-shaped rubber, a reinforcement core body 13 buried in the belt body 10, a plurality of magnet rows 14 arranged (i.e., buried) in the belt body 10, and each including a plurality of first magnets (magnets) 141, a plurality of second magnets (magnets) 15 buried adjacent to the plurality of magnet rows 14, respectively, in the belt body 10, and a plurality of belt failure detection mediums 16 buried adjacent to the plurality of magnet rows 14, respectively, in the belt body 10.

The position information processing device 3 of the present embodiment includes the plurality of magnet rows 14, the plurality of second magnets 15, the plurality of belt failure detection mediums 16, a magnetic sensor unit 31, a coil sensor unit 32, a processing unit 33, a display unit 34, and a storage unit 35.

The conveyor belt apparatus 4 of the present embodiment includes the position information processing device 3 of the present embodiment, the belt body 10, and the reinforcement core body 13.

In the present embodiment, the reinforcement core body 13 includes a plurality of reinforcement cords, and these reinforcement cords are arranged along the width direction, and extend along the circumferential direction. It is preferable that examples of a material forming the reinforcement cord include a steel and an organic fiber (a fiber made of nylon, polyester, aramid or the like). Alternatively, the reinforcement core body 13 may include canvas made of the organic fiber (the fiber made of nylon, polyester, aramid or the like) in place of or in addition to the plurality of reinforcement cords.

The belt body 10 includes a pair of ear rubber portions 10e on opposite outer sides of the reinforcement core body 13 in the width direction.

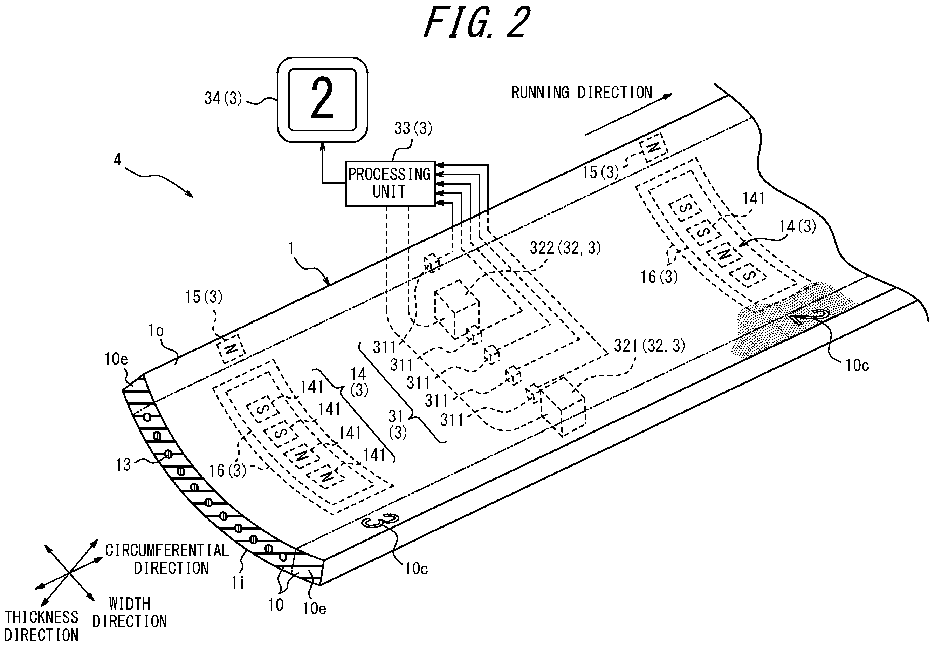

As illustrated in FIG. 1 to FIG. 4, a plurality of (eight in an example of FIG. 1) magnet rows 14 provided in the belt body 10 are arranged at positions away from one another in the circumferential direction, in the belt body 10, and each magnet row includes the plurality of (four in an example of FIG. 2) first magnets 141. These magnet rows 14 are arranged at even intervals along the circumferential direction. These magnet rows 14 are buried on inner sides of the pair of ear rubber portions 10e in the width direction, in the belt body 10. These magnets 141 forming the plurality of magnet rows 14, respectively, are arranged along the width direction.

Each first magnet 141 is magnetized in the thickness direction of the belt body 10, and includes a pole (a magnetic pole) on each of the inner circumferential side and the outer circumferential side.

Each of the plurality of magnet rows 14 forms a pole arrangement by an arrangement of respective poles of the plurality of first magnets 141 forming the magnet row 14 on the inner circumferential side or the outer circumferential side. For example, FIG. 4 illustrates a cross section of the conveyor belt 1 in the width direction at a position through a certain magnet row 14. The magnet row 14 forms a pole arrangement called "NNSN" when seen from the first side in the width direction (the left side in FIG. 4) toward the second side in the width direction (the right side in FIG. 4) on the inner circumferential side, and forms a pole arrangement called "SSNS" when seen from the first side in the width direction toward the second side in the width direction on the outer circumferential side. These magnet rows 14 are different from one another in the pole arrangement. The pole arrangements formed on the inner circumferential side and the outer circumferential side by the respective magnet rows 14 form position information of the magnet rows 14.

The processing unit 33 of the position information processing device 3 uses, as the position information of each magnet row 14, only one of the pole arrangements formed on the inner circumferential side and the outer circumferential side by each magnet row 14 as will be described later. Therefore, when "the pole arrangement" is simply referred to in the following description, the pole arrangement used by the processing unit 33 of the position information processing device 3 is indicated in the pole arrangements formed on the inner circumferential side or the outer circumferential side by the respective magnet rows 14. In the present embodiment, the processing unit 33 of the position information processing device 3 uses only the pole arrangement formed on the inner circumferential side by each magnet row 14 as the position information of each magnet row 14.

As illustrated in FIG. 2 to FIG. 4, in the present example, one second magnet 15 is buried in either one of the pair of ear rubber portions 10e (the ear rubber portion 10e on the first side in the width direction (the left side in FIG. 4) in the example of the drawing) adjacent to the magnet row 14 in the width direction, in the belt body 10. That is, in the present example, the plurality of first magnets 141 forming the magnet row 14 and the second magnet 15 adjacent to the magnet row 14 are arranged along the width direction.

The respective second magnets 15 are magnetized in the thickness direction of the belt body 10, and include poles (magnetic poles) on the inner circumferential side and the outer circumferential side, respectively.

Each second magnet 15 has a function of determining an order of the pole arrangement of the magnet row 14 adjacent to the magnet that is to be read by the processing unit 33. More specifically, the processing unit 33 is configured to specify the pole arrangement when the respective poles of the plurality of magnets 141 forming the magnet row 14 are arranged in order from a side close to the second magnet 15. In the example of the drawing, each second magnet 15 is disposed in the ear rubber portion 10e on the first side in the width direction, and hence, the pole arrangement of the magnet row 14 adjacent to each of the second magnets 15 is read in order from the first side in the width direction toward the second side in the width direction by the processing unit 33.

It is preferable that the poles of the respective second magnets 15 on the inner circumferential side are the same. In the example of the drawing, all the poles of the respective second magnets 15 are S-poles.

Alternatively, the second magnets 15 do not have to be provided.

Each of the first magnet 141 and the second magnet 15 may be an arbitrary type of magnet, and a rubber magnet is preferable due to improved adhesiveness to the belt body 10. An example of the rubber magnet is preferably a bond magnet formed by dispersing and mixing magnet powder in a rubber matrix, due to improved flexibility.

Also, it is preferable from a viewpoint of improving the flexibility that each first magnet 141 and each second magnet 15 are formed in a thin plate shape as in the example of FIG. 2 to FIG. 4. Each first magnet 141 and each second magnet 15 have a thickness (a dimension of the belt body 10 in the thickness direction) of, for example, preferably 3 mm or less and more preferably 1.5 mm or less.

As illustrated in FIG. 4, in the present example, each magnet row 14 and each second magnet 15 are arranged at the same positions in the thickness direction. Alternatively, each magnet row 14 and each second magnet 15 may be arranged at different positions in the thickness directions.

Also, in the present example, each magnet row 14 and each second magnet 15 are arranged on the inner circumferential side of the reinforcement core body 13.

The magnetic sensor unit 31 is configured to detect respective poles of the plurality of first magnets 141 forming the magnet row 14 and the second magnet 15 adjacent to the magnet row 14 on the inner circumferential side or the outer circumferential side (on the inner circumferential side in the present example). More specifically, in the present embodiment, the magnetic sensor unit 31 is disposed to face the inner circumferential surface 1i of the conveyor belt 1, on the inner circumferential side of the carrier-side portion of the conveyor belt 1 as illustrated in FIG. 1 to FIG. 4. The magnetic sensor unit 31 is, for example, at a position fixed to ground, floor surface or the like via a non-illustrated fixing frame. The magnetic sensor unit 31 is configured to detect the respective poles of the plurality of first magnets 141 forming the magnet row 14 and the second magnet 15 adjacent to the magnet row 14 on the inner circumferential side, when the certain magnet row 14 passes through a vicinity of (above, or on the outer circumferential side of) the magnetic sensor unit 31.

Also, in the present embodiment, the magnetic sensor unit 31 includes a plurality of magnetic sensors 311, and these magnetic sensors 311 are arranged one by one to correspond to the plurality of first magnets 141 forming one magnet row 14 and the second magnet 15 adjacent to the magnet row 14, respectively.

Each magnetic sensor 311 forming the magnetic sensor unit 31 is configured to be communicable with the processing unit 33 by wired communication or wireless communication. Furthermore, each magnetic sensor 311 is disposed adjacent to the corresponding magnet 141, 15 (the first magnet 141 or the second magnet 15), and is configured to detect the pole of the corresponding magnet 141, 15 (the first magnet 141 or the second magnet 15) on the inner circumferential side and output the pole to the processing unit 33.

In the present embodiment, as described above, the plurality of first magnets 141 forming the magnet row 14 and the second magnet 15 adjacent to the magnet row 14 are arranged along the width direction, and accordingly, the plurality of magnetic sensors 311 forming the magnetic sensor unit 31 are also arranged along the width direction when the conveyor belt 1 is seen in the thickness direction (in planar view) (FIG. 3). Also, the plurality of magnetic sensors 311 forming the magnetic sensor unit 31 are arranged at the same position in the width direction as that of the corresponding magnet 141, 15 (the first magnet 141 or the second magnet 15) in the planar view of the conveyor belt 1.

As illustrated in FIG. 1 to FIG. 4, a plurality of (eight in the example of FIG. 1) belt failure detection mediums 16 are buried adjacent to the plurality of magnet rows 14, respectively, in the belt body 10. These belt failure detection mediums 16 are arranged at even intervals along the circumferential direction. Each of the belt failure detection mediums 16 is used to detect whether or not vertical tear occurs in the conveyor belt 1 at a position of the medium.

In the present embodiment, each of the plurality of belt failure detection mediums 16 includes a conductive loop coil (hereinafter, referred to also as "the loop coil 16"). As enlarged and illustrated in FIG. 3, the loop coil 16 forms an elongated (substantially rectangular in the example of the drawing) ring shape extending in the width direction, and extends along an almost entire width of a portion between the pair of ear rubber portions 10e in the belt body 10. In the example of the drawing, each of the loop coils 16 includes two ring-shaped lead wires 16a, 16b arranged concentrically in the planar view when the conveyor belt 1 is seen in the thickness direction. In the planar view when the conveyor belt 1 is seen in the thickness direction, one lead wire 16a of each loop coil 16 is located on the inner circumferential side of the other lead wire 16b. Each of the lead wires 16a, 16b includes one conductive filament, or is formed by twisting a plurality of conductive filaments together. It is preferable that an example of a conductive material forming the lead wires 16a, 16b (eventually, the conductive filament) is steel. In an example of FIG. 3, each lead wire 16a, 16b forms a wave shape in the planar view when the conveyor belt 1 is seen in the thickness direction.

Alternatively, the loop coil 16 may include only one or three or more ring-shaped lead wires. Furthermore, the lead wires forming the loop coil 16 do not have to form the wave shape partially or entirely, and may form, for example, a linear shape.

As illustrated in FIG. 4, each of the loop coils 16 is disposed on the inner circumferential side of the reinforcement core body 13.

Also, in an example of the drawing, each magnet row 14 is disposed at about the same position as that of the loop coil 16 adjacent to the magnet row in the thickness direction in the belt body 10. More specifically, each magnet row is buried inside each loop coil 16 adjacent to the magnet row (inside (on the inner circumferential side of) the lead wire 16a on the inner circumferential side in the pair of lead wires 16a, 16b). On the other hand, each second magnet 15 is disposed at about the same position as that of the loop coil 16 adjacent to the second magnet in the thickness direction. More specifically, the second magnet is buried on the first side in the width direction (on the left side in FIG. 3 and FIG. 4) relative to the loop coil 16 adjacent to the second magnet.

It is preferable from a viewpoint of improving detection accuracy of vertical tear in the conveyor belt 1 that each loop coil 16 is configured to be disconnected when the vertical tear occurs in conveyor belt 1 at the position of the loop coil 16.

The coil sensor unit 32 includes a transmitter 321 configured to generate a magnetic field that generates induced current in the loop coil 16, and a receiver 322 configured to detect the induced current generated in the loop coil 16. In the present embodiment, as illustrated in FIG. 1 to FIG. 4, the coil sensor unit 32 is disposed to face the inner circumferential surface 1i of the conveyor belt 1 on the inner circumferential side of the carrier-side portion of the conveyor belt 1. The coil sensor unit 32 has its position fixed to the ground, the floor surface or the like, for example, via a non-illustrated fixing frame. The transmitter 321 and the receiver 322 are arranged away from each other in the width direction, and are arranged adjacent to positions in the width direction that correspond to opposite end portions of each loop coil 16 in the width direction in the planar view (FIG. 3) when the conveyor belt 1 is seen in the thickness direction.

The transmitter 321 includes, for example, an oscillation circuit (not illustrated in the drawing) that generates a high frequency magnetic field (e.g., about 11 kHz), and is configured to oscillate the high frequency magnetic field toward the conveyor belt 1. Furthermore, when the loop coil 16 passes through a vicinity of the transmitter 321 (on the outer circumferential side of the transmitter 321 in the present example), electromagnetic induction occurs due to the high frequency magnetic field emitted from the transmitter 321, and the induced current is generated in the loop coil 16.

The receiver 322 includes, for example, a reception coil (not illustrated in the drawing) in which an induced electromotive force is generated by the induced current generated in the loop coil 16. The receiver 322 detects the induced current generated in the loop coil 16 with this reception coil. The receiver 322 is connected to the processing unit 33, for example, via an amplifier (not illustrated in the drawing). Further, the receiver 322 is configured to output, to the processing unit 33, a detection signal of the induced current detected with the reception coil. When the loop coil 16 passes through a vicinity (the outer circumferential side in the example of the drawing) of the coil sensor unit 32, the induced current is generated in the loop coil 16 by the high frequency magnetic field oscillated from the transmitter 321, if the loop coil 16 is not disconnected. On the other hand, if the loop coil 16 is disconnected (fails) due to formation of the vertical tear in the conveyor belt 1, or the like, the induced current is not generated in the loop coil 16. As described later, the processing unit 33 determines whether or not the loop coil 16 is disconnected, based on the detection signal of the induced current outputted from the receiver 322.

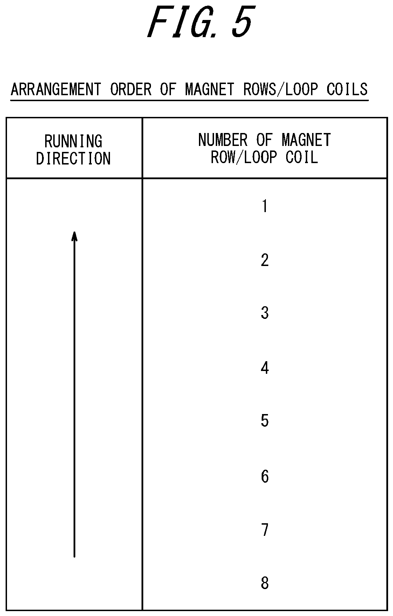

In the present embodiment, the magnet rows 14 are beforehand assigned with different numbers, respectively. The numbers beforehand assigned to the magnet rows 14 are also numbers beforehand assigned to the loop coils 16 adjacent to the magnet rows 14. In the present embodiment, the magnet rows 14 and the loop coils 16 are assigned with numbers "1" to "8", respectively, and an arrangement order of the numbers assigned along a running direction of the conveyor belt 1 is determined as provided in a table illustrated in FIG. 5. It is preferable that such numbers of the respective magnet rows 14 and the respective loop coils 16 and the arrangement order along the running direction as illustrated in FIG. 5 can be grasped by a user by a method (e.g., a method of storing related information on a computer, or the like) different from visual recognition of an after-mentioned different color outer surface portion 10c. Additionally, or alternatively, the storage unit 35 of the position information processing device 3 may store the numbers of the respective magnet rows 14 and the respective loop coils 16 and the arrangement order along the running direction, and the processing unit 33 may preferably use the information.

In the present embodiment, for the numbers of the respective magnet rows 14 and the respective loop coils 16, in the pole arrangement on the inner circumferential side of each magnet row 14, the S-pole is assigned with either one of 0 or 1 (1 in the present example), an N-pole is assigned with the other one of 0 or 1 (0 in the present example), and then a binary number is converted to a decimal number. For example, as to the magnet row 14 illustrated in FIG. 4, when the S-pole is assigned with 1 and the N-pole is assigned with 0 in the pole arrangement "NNSN" on the inner circumferential side of the magnet row 14, the binary number "0010" is converted to the decimal number, to obtain number "2". Therefore, the numbers of the magnet row 14 and the loop coil 16 adjacent to the magnet row illustrated in FIG. 4 are "2".

The processing unit 33 includes, for example, a CPU, and is configured to perform various processing described in the present description, based on program stored in the storage unit 35.

More specifically, for example, the processing unit 33 is configured to specify the pole arrangement of the magnet row 14, based on the poles of plurality of magnets 141 forming the magnet row 14 on the inner circumferential side that are outputted from the magnetic sensor unit 31 when the magnet row 14 passes through the vicinity (more specifically, the outer circumferential side) of the magnetic sensor unit 31. Also, the processing unit 33 is configured to convert the specified pole arrangement into the binary number, when the S-pole is assigned with either one of 0 or 1 and the N-pole is assigned with the other one of 0 or 1 in the pole arrangement. Further, the processing unit 33 is configured to convert the converted binary number into the decimal number, and display the decimal number in the display unit 34.

Also, the processing unit 33 is configured to determine whether or not the loop coil 16 is disconnected, based on presence or size of the induced current generated in the loop coil 16 that is detected by the receiver 322 of the coil sensor unit 32, when the loop coil 16 passes through the vicinity (more specifically, the outer circumferential side) of the coil sensor unit 32. For example, the processing unit 33 determines that the loop coil 16 is not disconnected, if the induced current in the loop coil 16 is detected by the receiver 322 of the coil sensor unit 32. This means that the vertical tear does not occur in the conveyor belt 1 at the position of the loop coil 16. On the other hand, the processing unit 33 determines that the loop coil 16 is disconnected, if the induced current in the loop coil 16 is not detected by the receiver 322 of the coil sensor unit 32. This means that at the position of the loop coil 16, the vertical tear occurs in the conveyor belt 1, or the vertical tear does not occur in the conveyor belt 1, and the loop coil 16 is disconnected due to fatigue or the like.

The storage unit 35 includes, for example, one or a plurality of ROMs, one or a plurality of RAMs, or the like, and stores the program to be executed by the processing unit 33, parameters for use in processing to be performed by the processing unit 33, and the like.

The display unit 34 includes, for example, one or a plurality of display units (displays, monitors or the like).

As illustrated in FIG. 2 and FIG. 3, in the present embodiment, the belt body 10 includes the outer surface portion (hereinafter, referred to as "the different color outer surface portion") 10c made of a color rubber in color other than black, in a portion adjacent to each of the plurality of magnet rows 14. It is preferable that an example of the color rubber is a white rubber in white. The different color outer surface portion 10c has color different from black of a remaining outer surface portion of the belt body 10, and is therefore easy to visually recognize. Furthermore, since each different color outer surface portion 10c is disposed adjacent to the corresponding magnet row 14, a user can visually recognize the different color outer surface portion 10c, to easily grasp that the magnet row 14 is present near the portion.

In the example of the drawing, each different color outer surface portion 10c is disposed in an end portion (more specifically, the ear rubber portion 10e in the example of the drawing) on either one side or each side of the belt body 10 in the width direction (the second side in the width direction in the example of the drawing), at the same position as that of each corresponding magnet row 14 in the circumferential direction. In this case, the different color outer surface portion 10c can be inhibited from being invisible behind the article to be conveyed in the carrier-side portion of the conveyor belt 1.

Also, in the example of the drawing, each different color outer surface portion 10c is formed in a shape of the number assigned to each adjacent magnet row 14 and loop coil 16. Consequently, the user can visually recognize the different color outer surface portion 10c, to easily grasp the number of the magnet row 14 present close to the portion.

Hereinafter, an operation of the position information processing device 3 of the present embodiment (eventually, the position information processing method for the conveyor belt of the present embodiment) will be illustrated and described.

Note that in the following description, the processing unit 33 performs the processing to be performed by the processing unit 33 based on the program stored in the storage unit 35.

In the present embodiment, the position information processing device 3 is configured to perform after-mentioned number specifying processing and coil disconnection determination processing in parallel, while the belt conveyor 2 is run.

### -Number Specifying Processing-

The processing unit 33 performs the number specifying processing every time the magnet row 14 passes through the vicinity (specifically, the outer circumferential side) of the magnetic sensor unit 31. In the number specifying processing, the processing unit 33 specifies the number assigned to the magnet row 14 passing through the vicinity of the magnetic sensor unit 31 (eventually, the number assigned to the loop coil 16 disposed adjacent to the corresponding magnet row 14). The number specifying processing includes a pole detection step, a pole arrangement specifying step, a binary number conversion step, a decimal number conversion step, and a displaying step as follows.

First, when the magnet row 14 passes through the vicinity (specifically, the outer circumferential side) of the magnetic sensor unit 31, the respective magnetic sensors 311 of the magnetic sensor unit 31 detect the respective poles of the plurality of first magnets 141 forming the magnet row 14, and the second magnet 15 adjacent to the magnet row 14 on the inner circumferential side or the outer circumferential side (the inner circumferential side in the present example), to output the poles to the processing unit 33 (the pole detection step). For example, in the example of FIG. 4, the respective magnetic sensors 311 of the magnetic sensor unit 31 detect, in the pole detection step, the poles "S", "N", "N", "S", "N" in order from the magnetic sensor 311 disposed on the first side in the width direction (the left side of FIG. 4), to output the poles to the processing unit 33.

Next, the processing unit 33 specifies the pole arrangement of the magnet row 14 based on the output from the magnetic sensor unit 31 in the pole detection step (the pole arrangement specifying step). Here, the processing unit 33 reads the poles in order from the first side in the width direction (the left side) to determine the pole arrangement of the magnet row 14, based on the pole on the inner circumferential side of the second magnet 15 disposed on the first side in the width direction relative to the magnet row 14, and the processing unit specifies the pole arrangement based on the respective poles other than the pole of the second magnet 15. For example, in the example of FIG. 4, the processing unit 33 specifies the pole arrangement "NNSN" based on the poles "S", "N", "N", "S", "N" outputted from the magnetic sensor 31 in the pole arrangement specifying step.

Next, the processing unit 33 converts the pole arrangement specified in the pole arrangement specifying step into the binary number when the S-pole is assigned with either one of 0 or 1 and the N-pole is assigned with the other one of 0 or 1 in the pole arrangement (the binary number conversion step). For example, in the example of FIG. 4, the processing unit 33 converts, in the binary number conversion step, the pole arrangement "NNSN" specified in the pole arrangement specifying step into the binary number "0010" when the S-pole is assigned with 1 and N-pole is assigned with 0 in the pole arrangement.

Next, the processing unit 33 converts the binary number obtained in the binary number conversion step into the decimal number (the decimal number conversion step). For example, in the example of FIG. 4, the processing unit 33 converts the binary number "0010" obtained in the binary number conversion step into the decimal number "2". The decimal number obtained in the decimal number conversion step is the number assigned to the magnet row 14 having the pole detected by the magnetic sensor unit 31 in the pole detection step and the loop coil 16 adjacent to the magnet row.

Next, the processing unit 33 displays the decimal number "2" obtained in the decimal number conversion step in the display unit 34 (the displaying step).

As above, one number specifying processing ends. Afterward, when the next magnet row 14 passes through the vicinity (specifically, the outer circumferential side) of the magnetic sensor unit 31, the position information processing device 3 performs the number specifying processing again.

Thus, every time the magnet row 14 passes through the vicinity of the magnetic sensor unit 31, the display unit 34 displays the number of the magnet row 14 that passes through the vicinity of the magnetic sensor unit 31 (and the loop coil 16 adjacent to the magnet row).

Consequently, the user can visually recognize the number displayed in the display unit 34, to grasp, in real time, that the magnet row 14 and loop coil 16 with the number pass through the vicinity of the magnetic sensor unit 31.

### -Coil Disconnection Determination Processing-

The processing unit 33 performs the coil disconnection determination processing every time the loop coil 16 passes through the vicinity (specifically, the outer circumferential side) of the coil sensor unit 32. In the coil disconnection determination processing, the processing unit 33 determines whether or not the loop coil 16 passing through the vicinity of the coil sensor unit 32 is disconnected. The coil disconnection determination processing includes performing an induced current detection step and a determination step as follows, while the disconnection of the loop coil 16 is not detected. On the other hand, the coil disconnection determination processing includes performing an alarm step and a stop step as follows, after the disconnection of the loop coil 16 is detected in the determination step.

First, when the loop coil 16 passes through the vicinity (specifically, the outer circumferential side) of the coil sensor unit 32, the receiver 322 of the coil sensor unit 32 outputs, to the processing unit 33, the detection signal of the induced current in the loop coil 16 (the induced current detection step).

Next, the processing unit 33 determines whether or not the loop coil 16 is disconnected, based on the detection signal outputted from the receiver 322 in the induced current detection step (the determination step). In the determination step, if the processing unit 33 determines that the induced current is generated in the loop coil 16, based on the detection signal outputted from the receiver 322 in the determination step, the processing unit determines that the loop coil 16 is not disconnected. As above, one coil disconnection determination processing ends. Afterward, when the next loop coil 16 passes through the vicinity (specifically, the outer circumferential side) of the coil sensor unit 32, the position information processing device 3 performs the coil disconnection determination processing again.

On the other hand, if the processing unit 33 determines that the induced current is not generated in the loop coil 16, based on the detection signal outputted from the receiver 322 in the determination step, the processing unit determines that the loop coil 16 is disconnected. Afterward, the processing unit 33 issues an alarm by arbitrary means (the alarm step). In the alarm step, for example, the processing unit 33 provides display notifying that there is the disconnection in the display unit 34, or generates alarm sound from a speaker (not illustrated in the drawing). Furthermore, in the determination step, the processing unit 33 determines that the loop coil 16 is disconnected, and then, the processing unit 33 stops an operation of the drive pulley P1 (eventually, an operation of the conveyor belt 1) (the stop step). As above, the coil disconnection determination processing ends.

Note that the processing unit 33 does not have to perform the stop step. In this case, the operation of the drive pulley P1 (eventually, the operation of the conveyor belt 1) may be manually stopped.

Here, in the present example, since the magnetic sensor unit 31 and the coil sensor unit 32 are arranged at the same position in the circumferential direction, timing when the magnet row 14 passes through the vicinity (the outer circumferential side) of the magnetic sensor unit 31 is about the same as timing when the loop coil 16 disposed adjacent to the magnet row 14 passes through the vicinity (the outer circumferential side) of the coil sensor unit 32. Therefore, the number specified in the number specifying processing performed at timing immediately close to timing when the alarm is issued in the alarm step corresponds to the number of the disconnected loop coil 16. Therefore, the user can visually recognize the number displayed in the display unit 34 when the alarm is issued, to easily grasp which number of loop coil 16 is disconnected.

Also, according to the present example, it is easy for the user to specify an actual position where the loop coil 16 with the number is present, after the number of the disconnected loop coil 16 is grasped as described above. For example, when the user only finds the number of the disconnected loop coil 16 by visually recognizing and following the number of each different color outer surface portion 10c on the conveyor belt 1 while moving along a side of the conveyor belt 1 stopped in the stop step, the user can easily specify the actual position of the disconnected loop coil 16.

Note that after reaching the disconnected loop coil 16, the user observes a state of the conveyor belt 1 at this position. If the vertical tear occurs in the conveyor belt 1, the user repairs or replaces the conveyor belt 1, or if the vertical tear does not occur in the conveyor belt 1 and the loop coil 16 is disconnected, the user removes the loop coil 16 and buries a new loop coil 16 in the same position. Thus, the conveyor belt 1 can be repaired.

Note that in the coil disconnection determination processing, if the processing unit 33 determines in the determination step that the loop coil 16 is disconnected, the number specified in the number specifying processing performed at the immediately close timing may be specified as the number of the disconnected loop coil 16 (a disconnected coil number specifying step). After the disconnected coil number specifying step, for example, the number specified in the disconnected coil number specifying step, together with a message indicating the disconnection, may be continued to be displayed in the display unit 34 by the processing unit 33, or may be displayed as history display in the display unit 34 at arbitrary timing in accordance with an input by the user. Consequently, the user can easily grasp the number of the disconnected loop coil 16.

Next, effects of the present embodiment will be described.

In the present embodiment, as described above, the plurality of magnet rows 14 arranged at the positions away from one another in the circumferential direction in the conveyor belt 1 form the respective pole arrangements providing the position information, and are different from one another in the pole arrangement. Thus, in the present embodiment, the respective magnet rows 14 are individually assigned with the numbers, and hence, the plurality of positions (the respective positions where the plurality of magnet rows 14 are present) on the conveyor belt 1 can be easily individually managed independently of one another.

Consequently, for example, only by grasping the number and actual position of one of the magnet rows 14 by use of the position information processing device 3, the user can easily specify the position of the other magnet row 14. Specifically, for example, the user can easily specify how far away in which direction from the one magnet row 14 the actual position of any other magnet row 14 is, based on the information of the arrangement order of the magnet row 14 illustrated in FIG. 5, and an interval between the respective magnet rows 14 (e.g., 30 m along the circumferential direction).

Also, for example, if the belt failure detection medium 16 is disposed adjacent to each of the magnet rows 14 as in the present embodiment, the respective belt failure detection mediums 16 can be individually assigned with the numbers. Therefore, the respective belt failure detection mediums 16 can be easily individually managed independently of one another.

Note that in a case where a plurality of loop coils arranged at even intervals along the circumferential direction and a start loop coil including two loop coils arranged close to each other are buried in a conveyor belt, and a position of each loop coil can be specified based on a position of the start loop coil as in PTL 1 described above, the position of each loop coil needs to be specified based on the start loop coil. That is, the position of each loop coil can be grasped only as a relative position to the start loop coil, and hence, it is not easy to individually manage positions of respective loop coils. Furthermore, the vertical tear detecting loop coil is easy to disconnect (fail). Therefore, once the start loop coil is disconnected, the position of each loop coil cannot be specified. If the start loop coil fails, replacement of the start loop coil takes time and labor. Also, there is concern that a noise canceling technology needs to be used for the pair of loop coils forming the start loop coil.

On the other hand, according to the present embodiment, the start loop coil is not needed. Therefore, time and labor for repair needed if the start loop coil fails are not needed, and manufacturability and durability can improve. Additionally, the noise canceling technology needed if the start loop coil is used is neither needed.

Furthermore, the respective magnets 141 forming the magnet row 14 continue to generate the magnetic field semi-permanently, and hence, the magnets might not be unusable. Therefore, the durability can improve.

Alternatively, the start loop coil may be provided in the belt body 10.

Note that as a technique of individually managing the respective positions on the conveyor belt 1, it is also considered that RFID configured to transmit the position information is disposed in place of the magnet row 14. However, in this case, there is concern that manufacturing cost increases, and there is also concern that the RFID fails and becomes unusable due to high temperature heat in a vulcanization process of the conveyor belt 1.

In that respect, according to the present embodiment, the magnet row 14 is used, and hence, the manufacturing cost can be minimized. Furthermore, the magnet row 14 can withstand the high temperature heat in the vulcanization process of the conveyor belt 1 without any problems.

Also, in the present embodiment, the processing unit 33 converts the pole arrangement formed by the magnet row 14 into the binary number (the binary number conversion step), further converts the number into the decimal number (the decimal number conversion step), and displays the decimal number in the display unit 34 (the displaying step) as described above in the number specifying processing. Consequently, the pole arrangement formed by the magnet row 14 can be converted into a form that is easy for the user to grasp (the decimal number). Therefore, the user can more easily individually manage the respective positions on the conveyor belt.

Note that the decimal number conversion step may be omitted. In this case, for example, the binary number obtained in the decimal number conversion step may be displayed in the display unit 34 in the displaying step. In this case, each magnet row 14 and the loop coil 16 disposed adjacent to the magnet row are assigned with the binary number. Also, in this case, as compared with a presumed case where the binary number conversion step and the decimal number conversion step are not performed, the pole arrangement formed by the magnet row 14 can be converted into the form that is easy for the user to grasp (the binary number), and hence, the user can more easily individually manage the respective positions on the conveyor belt.

Note that the binary number conversion step and/or the displaying step may be omitted.

As illustrated in FIG. 3, in the present example, the plurality of rubber magnets 141 forming each of the plurality of magnet rows 14 are arranged along the width direction. Furthermore, the plurality of magnetic sensors 311 forming the magnetic sensor unit 31 are arranged along the width direction in the planar view when the conveyor belt 1 is seen in the thickness direction. Consequently, as compared with a presumed case where the plurality of magnets 141 forming the magnet row 14 are arranged along a direction intersecting the width direction in the planar view of the conveyor belt 1 (the circumferential direction, a direction inclined at an acute angle to the width direction, or the like), the magnetic sensor unit 31 can detect the poles of the respective magnets 141 of the magnet row 14 passing through the vicinity of the unit in a shorter time, and eventually, the position information processing device 3 can specify the pole arrangement of the magnet row 14 in a shorter time.

Alternatively, the plurality of magnets 141 forming the magnet row 14 may be arranged along the direction intersecting the width direction in the planar view of the conveyor belt 1 (the circumferential direction, the direction inclined at the acute angle to the width direction, or the like).

As illustrated in FIG. 4, in the present example, the plurality of magnetic sensors 311 forming the magnetic sensor unit 31 are arranged along a bent shape formed by the carrier-side portion of the conveyor belt 1 in the cross section in the width direction. Consequently, the respective magnetic sensors are arranged to be located at approximately equal distances from each corresponding magnet 141, 15 (the first magnet 141 or the second magnet 15), and hence, mutual positions in an up-down direction (the perpendicular direction) are non-uniform (not the same). In consequence, each magnetic sensor 311 can accurately detect the pole of each corresponding magnet 141, 15.

Alternatively, the plurality of magnetic sensors 311 forming the magnetic sensor unit 31 do not have to be located at the approximately equal distances from each corresponding magnet 141, 15 (the first magnet 141 or the second magnet 15), and/or the mutual positions in the up-down direction (the perpendicular direction) may be the same.

Furthermore, the magnetic sensor unit 31 may include a number (e.g., one) of the magnetic sensors 311 that is smaller than a total number (five in the example of the drawing) of the first magnets 141 forming the magnet row 14 and the second magnet 15, as long as the magnetic sensor unit is configured to detect the respective poles of the plurality of first magnets 141 forming one of the magnet rows 14 adjacent to the magnetic sensor unit 31 and the second magnet 15 adjacent to the magnet row 14 on the inner circumferential side or the outer circumferential side.

Also, in the present example, the plurality of belt failure detection mediums 16 are buried adjacent to the plurality of magnet rows 14, respectively, in the belt body 10. Consequently, the number assignment to the respective magnet rows 14 is also applicable to the belt failure detection mediums 16 that are arranged adjacent to the magnet rows 14, respectively. In other words, each belt failure detection medium 16 may be assigned with the number in accordance with the magnet row 14.

Consequently, the individual management of the respective belt failure detection mediums 16 can be easily performed. Furthermore, if one of the belt failure detection mediums 16 fails, specifying of a position of the belt failure detection medium 16 that fails and additionally specifying of a failure portion of the conveyor belt 1 can be easily performed.

Further, in the present example, each of the plurality of belt failure detection mediums 16 includes one or a plurality of conductive loop coils. In this case, it is detected in the above described coil disconnection determination processing whether or not the loop coil 16 is disconnected, so that the vertical tear of the conveyor belt can be detected.

Also, in the present example, each of the plurality of magnet rows 14 is buried inside the loop coil 16 adjacent to the magnet row in the belt body 10 (FIG. 3). Consequently, the magnet row 14 can be disposed at the same position as that of the loop coil 16 (the position in the circumferential direction, or the position in the width direction). Therefore, the timing when the magnetic sensor unit 31 detects the respective poles of the magnet row 14 (the pole detection step) can be closer to the timing when the coil sensor unit 32 detects the induced current of the loop coil 16 (the induced current detection step). Consequently, if one of the loop coils 16 fails, the user can more easily specify the number and position of the loop coil 16 that fails.

Note that a medium other than the loop coil may be used as the belt failure detection medium 16.

Furthermore, each of the magnet rows 14 may be disposed at an arbitrary relative position to the corresponding belt failure detection medium 16, as long as the magnet row is disposed adjacent to the corresponding belt failure detection medium 16 (more adjacent thereto than to the other belt failure detection medium 16). For example, each of the magnet rows 14 may be disposed on the outer circumferential side and/or the inner circumferential side of the corresponding belt failure detection medium 16 in the thickness direction, and/or may be disposed on either one side or each side of the corresponding belt failure detection medium 16 in the circumferential direction, and/or may be disposed in the ear rubber portion 10e on either one side or each side of the corresponding belt failure detection medium 16 in the width direction.

As illustrated in FIG. 4, in the present example, each magnet row 14 and each second magnet 15 are arranged on the inner circumferential side of the reinforcement core body 13. This can prevent each magnet row 14 and each second magnet 15 from being affected by wear that may occur on the belt body 10 on the outer circumferential side of the reinforcement core body 13, and can improve durability and reliability of the position information processing device 3. Alternatively, each magnet row 14 and each second magnet 15 may be located on the outer circumferential side of the reinforcement core body 13.

Also, as illustrated in FIG. 4, in the present example, each of the loop coils 16 is disposed on the inner circumferential side of the reinforcement core body 13. This can prevent each loop coil 16 from being affected by the wear that may occur on the belt body 10 on the outer circumferential side of the reinforcement core body 13. Alternatively, each loop coil 16 may be located on the outer circumferential side of the reinforcement core body 13.

Further, in the present example, the belt body 10 includes the outer surface portion (the different color outer surface portion) made of the color rubber in the color other than black, in the portion adjacent to each of the plurality of magnet rows 14, and hence, the user can visually recognize the different color outer surface portion 10c, to easily grasp that the magnet row 14 is present close to the portion. Therefore, the respective positions on the conveyor belt can be more easily individually managed.

Also, in the example of the drawing, each different color outer surface portion 10c is formed in the shape of the number assigned to the magnet row 14 and loop coil 16 adjacent to the portion. Consequently, the user can visually recognize the different color outer surface portion 10c, to easily grasp the number of the magnet row 14 that is present close to the portion.

Additionally, the different color outer surface portion 10c may be formed, for example, in a geometric shape such as a rectangular shape or a round shape, a pattern shape, a character shape, or another arbitrary shape.

Further, in the example of the drawings, each different color outer surface portion 10c is disposed on the outer circumferential surface 1o in the end portion (more specifically, the ear rubber portion 10e in the example of the drawing) on either one side or each side of the belt body 10 in the width direction (the second side in the width direction in the example of the drawing) at the same position as that of each corresponding magnet row 14 in the circumferential direction. In this case, the different color outer surface portion 10c can be inhibited from being invisible behind the article to be conveyed in the carrier-side portion of the conveyor belt 1.

Alternatively, each different color outer surface portion 10c may be disposed at an arbitrary position, as long as the portion is disposed adjacent to the corresponding magnet row 14 (more adjacent thereto than to the other magnet row 14). For example, each of the different color outer surface portions 10c may be disposed on a side surface outside the ear rubber portion 10e in the width direction and/or on an inner circumferential surface of the ear rubber portion 10e. Additionally, or alternatively, each of the different color outer surface portions 10c may be disposed on an outer circumferential surface and/or an inner circumferential surface of a portion between the pair of ear rubber portions 10e in the belt body 10.

Note that the different color outer surface portion 10c does not have to be provided, and an entire outer surface of the conveyor belt 1 may be in black.

### [Second Embodiment]

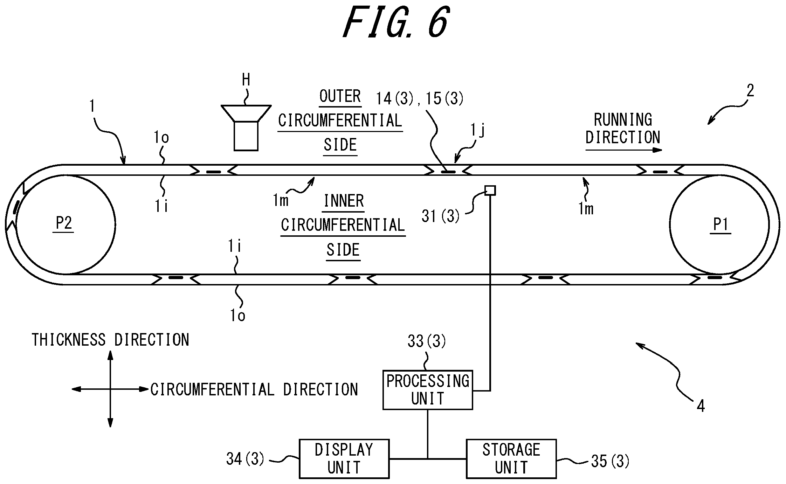

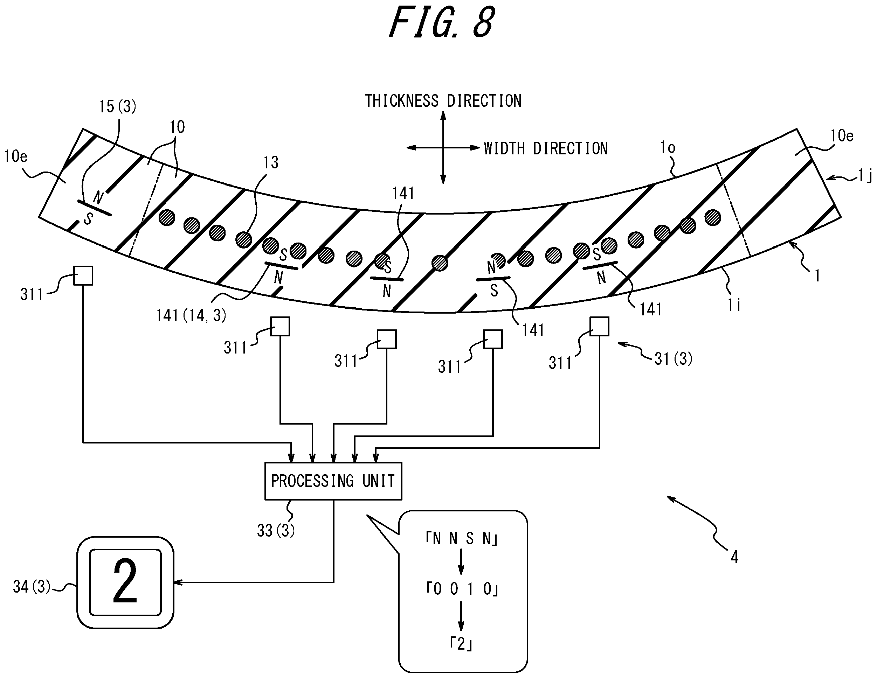

FIG. 6 to FIG. 8 illustrate a position information processing device 3 for a conveyor belt according to a second embodiment of the present disclosure, a conveyor belt apparatus 4 according to the second embodiment of the present disclosure, and a belt conveyor 2 provided with a conveyor belt 1 according to the second embodiment of the present disclosure. Hereinafter, differences from the first embodiment of the present disclosure will be mainly described as to the position information processing device 3 for the conveyor belt according to the second embodiment of the present disclosure, the conveyor belt apparatus 4 according to the second embodiment of the present disclosure, and the belt conveyor 2 provided with the conveyor belt 1 according to the second embodiment of the present disclosure.

Note that the position information processing device 3 for the conveyor belt according to the second embodiment of the present disclosure also corresponds to a position information processing device according to the second embodiment of the present disclosure. Hereinafter, the position information processing device 3 for the conveyor belt according to the present embodiment will be also referred to simply as "the position information processing device 3".

The second embodiment is different from the first embodiment in that the belt failure detection medium 16 and the coil sensor unit 32 in the first embodiment are not provided.

The conveyor belt 1 of the second embodiment includes a belt body 10 made of an endless ring-shaped rubber, a reinforcement core body 13 buried in the belt body 10, a plurality of magnet rows 14 arranged (i.e., buried) in the belt body 10, and each including a plurality of first magnets (magnets) 141, and a plurality of second magnets (magnets) 15 buried adjacent to the plurality of magnet rows 14, respectively, in the belt body 10.

The position information processing device 3 of the present embodiment includes the plurality of magnet rows 14, the plurality of second magnets 15, a magnetic sensor unit 31, a processing unit 33, a display unit 34, and a storage unit 35.

The conveyor belt apparatus 4 of the present embodiment includes the position information processing device 3 of the present embodiment, the belt body 10, and the reinforcement core body 13.

Respective configurations may be similar to those of the first embodiment.

In the present embodiment, the position information processing device 3 is configured to perform the above described number specifying processing, and is configured not to perform the above described coil disconnection determination processing.

Also, according to the present embodiment, similarly to the first embodiment, a plurality of positions (the respective positions where the plurality of magnet rows 14 are present) on the conveyor belt 1 can be easily individually managed independently of one another.

Note that in an example of FIG. 6 to FIG. 8, as illustrated in FIG. 6, the conveyor belt 1 includes one or a plurality of (eight in the example of the drawing) belt-shaped body portions 1m forming a part of the conveyor belt 1 in a circumferential direction, and one or a plurality of (eight in the example of the drawing) connecting portions 1j each connecting the body portions 1m to each other. The body portions 1m and the connecting portions 1j are alternately arranged along the circumferential direction.

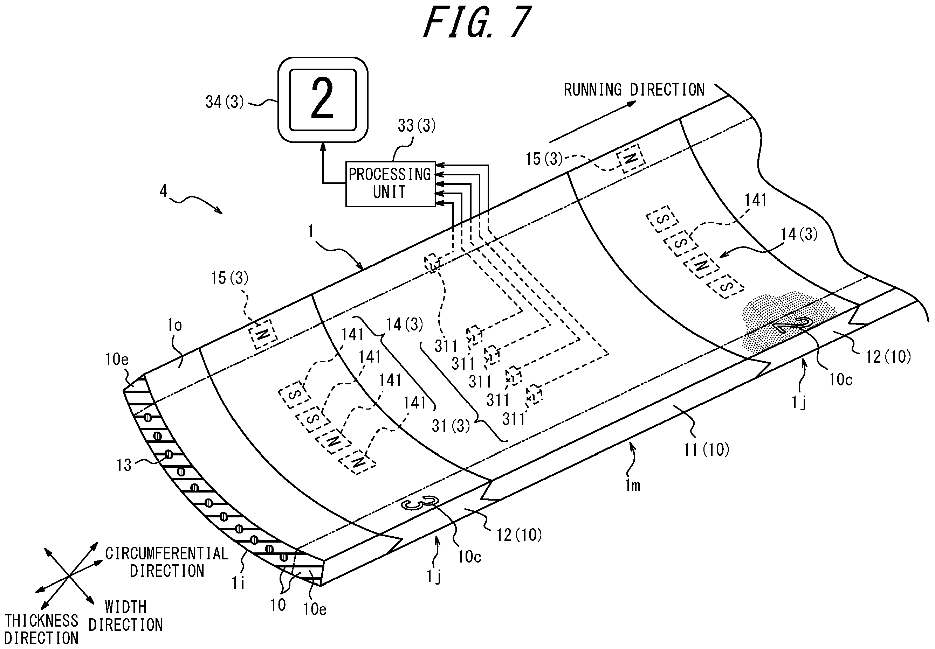

As illustrated in FIG. 7, the belt body 10 includes a body rubber portion 11 and a connecting rubber portion 12. The body rubber portion 11 is a rubber forming the body portion 1m of the conveyor belt 1 in the belt body 10. The connecting rubber portion 12 is a rubber forming the connecting portion 1j of the conveyor belt 1 in the belt body 10. In other words, the connecting rubber portion is provided in the connecting portion 1j, and connects end portions in the circumferential direction of a pair of body rubber portions 11 adjacent to each other in the circumferential direction.

The reinforcement core body 13 in the belt body 10 is divided in the connecting portion 1j, and respective end portions in the circumferential direction are located in the connecting portion 1j.

The connecting rubber portion 12 has wear resistance lower than that of the body rubber portion 11. Therefore, wear more easily occurs on the connecting rubber portion 12 than on the body rubber portion 11, due to interference with an article to be conveyed, or the like.

Further, in the present example, each of the plurality of magnet rows 14 is provided in the connecting rubber portion 12, and is not provided in the body rubber portion 11. The magnet rows 14 are provided one by one to the respective connecting rubber portions 12.

According to this configuration, each connecting portion 1j can be assigned with a number in accordance with the magnet row 14, and hence, individual management of the respective connecting portions 1j (the connecting rubber portions 12) is facilitated. The connecting portion 1j (the connecting rubber portion 12) is a portion that is particularly prone to wear as described above, and is therefore a portion that particularly requires management of a worn situation. Therefore, the configuration of the present example has a merit that individual management of the worn situations of the respective connecting portions 1j (the connecting rubber portions 12) is facilitated.

Note that the above described first and second embodiments are not restrictive, and the position information processing device for the conveyor belt, the conveyor belt apparatus, the position information processing method for the conveyor belt, the conveyor belt and the position information processing device according to the present disclosure can be variously modified.

For example, in the above described examples, the plurality of magnet rows 14 and the plurality of second magnets 15 may be arranged at arbitrary positions inside or on the surface of the belt body 10.

Also, in the above described examples, the magnetic sensor unit 31 may be disposed to face the outer circumferential surface 1o of the conveyor belt 1 on the outer circumferential side of the carrier-side portion of the conveyor belt 1, or may be disposed to face the outer circumferential surface 1o or the inner circumferential surface 1i of the conveyor belt 1 on the outer circumferential side or the inner circumferential side of the return-side portion of the conveyor belt 1.

Further, in the above described examples, the magnetic sensor unit 31 does not have to be fixed to the ground or the like, and may be provided in a portable device that the user can carry around. In this case, a part or all of the processing unit 33, a part or all of the display unit 34, and/or a part or all of the storage unit 35 may be provided in the portable device.

Also, in the above described first embodiment, the coil sensor unit 32 may be disposed to face the outer circumferential surface 1o of the conveyor belt 1 on the outer circumferential side of the carrier-side portion of the conveyor belt 1, or may be disposed to face the outer circumferential surface 1o or the inner circumferential surface 1i of the conveyor belt 1 on the outer circumferential side or the inner circumferential side of the return-side portion of the conveyor belt 1.

Further, in the above described second embodiment, the position information processing device 3 may be configured for use in an object other than the conveyor belt 1. In this case, the respective magnet rows 14 may be arranged at positions away from one another inside or on a surface of the object. Furthermore, each of the plurality of magnet rows 14 forms the pole arrangement providing the position information by an arrangement of respective poles of the plurality of magnets 141 forming the magnet row 14 on the same side. Additionally, the magnetic sensor unit 31 may be configured to detect respective poles of a plurality of magnets forming the magnet row 14 on the same side. Others may be the same as in the second embodiment.

Consequently, similarly to the second embodiment, respective positions on an object can be easily individually managed.

### INDUSTRIAL APPLICABILITY

A position information processing device for a conveyor belt, a conveyor belt apparatus, a position information processing method for a conveyor belt and a conveyor belt of the present disclosure can be used preferably, for example, in a conveyor belt to convey various articles to be conveyed in a mining site, a construction site and the like.

A position information processing device of the present disclosure can be used preferably in various objects including the conveyor belt.

### REFERENCE SIGNS LIST

1 conveyor belt
1o outer circumferential surface
1i inner circumferential surface
1j connecting portion
1m body portion
10 belt body
10e ear rubber portion
10c different color outer surface portion (outer surface portion made of a color rubber)
11 body rubber portion
12 connecting rubber portion
13 reinforcement core body (steel cord)
14 magnet row
141 first magnet (magnet)
15 second magnet (magnet)
16 loop coil (belt failure detection medium)
16a, 16b lead wire
2 belt conveyor
3 position information processing device (position information processing device for conveyor belt)
31 magnetic sensor unit
311 magnetic sensor
32 coil sensor unit
321 transmitter
322 receiver
33 processing unit
34 display unit
35 storage unit
4 conveyor belt apparatus
H hopper
P1, P2 pulley

## Claims

1. A position information processing device for a conveyor belt comprising a belt body made of an endless ring-shaped rubber, the position information processing device comprising:
a plurality of magnet rows arranged at positions away from one another in a circumferential direction inside or on a surface of the belt body of the conveyor belt, each magnet row including a plurality of magnets,
a magnetic sensor unit, and
a processing unit, wherein
each of the plurality of magnet rows forms a pole arrangement providing position information by an arrangement of respective poles of the plurality of magnets forming the magnet row on an inner circumferential side or an outer circumferential side of the belt body,
the plurality of magnet rows are different from one another in the pole arrangement,
the magnetic sensor unit is configured to detect the respective poles of the plurality of magnets forming the magnet row on the inner circumferential side or the outer circumferential side of the belt body, and
the processing unit is configured to specify the pole arrangement of the magnet row based on an output from the magnetic sensor unit.

2. The position information processing device for the conveyor belt according to claim 1, wherein the processing unit is configured to convert the pole arrangement into a binary number when an S-pole is assigned with either one of 0 or 1 and an N-pole is assigned with the other one of 0 or 1 in the pole arrangement.

3. The position information processing device for the conveyor belt according to claim 2, further comprising:
a display unit,
wherein the processing unit is configured to convert the binary number into a decimal number, and display the decimal number in the display unit.

4. The position information processing device for the conveyor belt according to any one of claims 1 to 3, wherein the belt body includes an outer surface portion made of a color rubber in color other than black, in a portion adjacent to each of the plurality of magnet rows.

5. The position information processing device for the conveyor belt according to any one of claims 1 to 4, wherein the plurality of magnets forming each of the plurality of magnet rows are arranged along a width direction of the belt body.

6. The position information processing device for the conveyor belt according to any one of claims 1 to 5, further comprising:
a plurality of belt failure detection mediums buried adjacent to the plurality of magnet rows, respectively, in the belt body.

7. The position information processing device for the conveyor belt according to claim 6, wherein each of the plurality of belt failure detection mediums comprises a conductive loop coil.

8. The position information processing device for the conveyor belt according to claim 7, wherein the plurality of magnet rows are buried inside the loop coils adjacent to the respective magnet rows, in the belt body.

9. A conveyor belt apparatus comprising:
the position information processing device for the conveyor belt according to any one of claims 1 to 8, and
the belt body of the conveyor belt.

10. A position information processing method for a conveyor belt in which the position information processing device for the conveyor belt according to any one of claims 1 to 8 is used, the method comprising:
a pole detection step of detecting, by the magnetic sensor unit, respective poles of the plurality of magnets forming the magnet row on the inner circumferential side or the outer circumferential side of the belt body, and
a pole arrangement specifying step of specifying, by the processing unit, the pole arrangement of the magnet row based on an output from the magnetic sensor unit in the pole detection step.

11. A conveyor belt comprising:
a belt body made of an endless ring-shaped rubber, and
a plurality of magnet rows arranged at positions away from one another in a circumferential direction inside or on a surface of the belt body, each magnet row including a plurality of magnets, wherein
each of the plurality of magnet rows forms a pole arrangement by an arrangement of respective poles of the plurality of magnets forming the magnet row on an inner circumferential side or an outer circumferential side of the belt body, and
the plurality of magnet rows are different from one another in the pole arrangement.
12. A position information processing device comprising:
a plurality of magnet rows arranged at positions away from one another inside or on a surface of an object, each magnet row including a plurality of magnets,
a magnetic sensor unit, and
a processing unit, wherein
each of the plurality of magnet rows forms a pole arrangement providing position information by an arrangement of respective poles of the plurality of magnets forming the magnet row on the same side,
the plurality of magnet rows are different from one another in the pole arrangement,
the magnetic sensor unit is configured to detect the respective poles of the plurality of magnets forming the magnet row on the same side, and
the processing unit is configured to specify the pole arrangement of the magnet row based on an output from the magnetic sensor unit.
